(19) Europäisches Patentamt / European Patent Office / Office européen des brevets

(11) **EP 2 827 339 A1**

(12) **EUROPEAN PATENT APPLICATION**

(43) Date of publication:
**21.01.2015 Bulletin 2015/04**

(51) Int Cl.:
***G21K 1/02*** *(2006.01)*

(21) Application number: **14176029.8**

(22) Date of filing: **07.07.2014**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **16.07.2013 JP 2013147468**

(71) Applicant: **CANON KABUSHIKI KAISHA
Ohta-ku
Tokyo 146-8501 (JP)**

(72) Inventor: **Sato, Genta
Ohta-ku, Tokyo (JP)**

(74) Representative: **Derham, Cassandra Virginie
Canon Europe Ltd
European Patent Department
3 The Square
Stockley Park
Uxbridge, Middlesex UB11 1ET (GB)**

(54) **Source grating, interferometer, and object information acquisition system**

(57) A source grating (4) includes a first sub-source grating (104), where first transmitting portions (124) which transmit X-rays, and first shielding portions (114) which shield X-rays, are alternately arranged in a first direction; and a second sub-source grating (204), where second transmitting portions (224) which transmit X-rays, and second shielding portions (214) which shield X-rays, are alternately arranged in a second direction orthogonal to the first direction. The first sub-source grating (104) is curved so that two positions in the curve align in the first direction. The second sub-source grating (204) is curved so that two positions in the curve align in the second direction.

FIG. 1

**Description**

BACKGROUND OF THE INVENTION

Field of the Invention

The present invention relates to source grating to split emitted X-rays, an interferometer using X-rays, and an object information acquisition system.

Description of the Related Art

Talbot-Lau X-ray interferometry (or simply "Talbot-Lau interferometry") is a type of X-ray phase-contrast method which takes advantage of phase differences in X-rays occurring at an object. It utilizes Talbot interference in X-rays and the Lau effect.

Talbot-Lau X-ray interferometry uses an X-ray interferometer including a source grating to split X-rays, a diffraction grating to diffract X-rays from the source grating, and an X-ray detector to detect X-rays from the diffraction grating. An overview of Talbot-Lau interferometry is given below.

The source grating includes X-ray transmitting portions (hereinafter may be referred to simply as "transmitting portions") and X-ray shielding portions (hereinafter may be referred to simply as "shielding portions"), whereby X-rays emitted thereto are split and formed into multiple X-ray beams. This allows the diffraction grating to be irradiated by X-ray beams having spatial coherence. The diffraction grating diffracts the X-rays from the source grating, and forms interference patterns according to the Talbot effect (hereinafter, the portions of the interference patterns that are repeated images of the diffraction grating may be referred to as "self-images"). The X-ray detector detects X-rays from the diffraction grating. When an object is placed between the source grating and diffraction grating or between the diffraction grating and the X-ray detector, the object causes the phase and intensity of the X-rays to change, and the self-image also changes. Thus, detecting the X-rays making up this self-image using the X-ray detector enables information of change in the self-image caused by the object to be obtained. Performing various types of calculation on the information of the self-image (giving rise to "detection results") yields information regarding X-ray phase change, intensity change, amount of scattering, and so forth, caused by the object as necessary. In the present description, information of change in the self-image caused by the object, and various types of information relating to the object obtained from information of change in the self-image (information of phase change of X-rays caused by the object, information of intensity change of X-rays, information of scattering of X-rays, and so forth) are collectively referred to as "object information".

Generally, the pitch of self-images is very small, and accordingly, directly detecting self-images using the X-ray detector may be difficult. Accordingly, a method has been proposed in which a shielding grating is situated at a position where self-images are formed, and a pattern having a greater pitch than the self-images (so-called moire pattern) is formed, which is detected by the X-ray detector. In a case where a shielding grating is used, the X-ray detector detects the X-rays forming the pattern formed by the self-image and shielding grating, but also indirectly detects the self-image affected by the object as well. Accordingly, even though X-rays forming the pattern formed of the self-image and shielding grating are detected, information of change in the self-image caused by the object can be obtained.

In order to form a self-image where light portions and dark portions are arranged in two directions (which hereinafter may be referred to as a "two-dimensional self-image" or "two-dimensional interference pattern"), there is a need to irradiate the diffraction grating by X-rays having spatial coherence two-dimensionally (in the periodicity directions of the diffraction grating). A source grating where transmitting portions are two-dimensionally arranged (which hereinafter may be referred to as "two-dimensional source grating") may be used to this end.

Physical Review Letters 105 (2010) 248102 describes a shielding grating which functions as a two-dimensional shielding grating where two shielding gratings, each having line-shaped transmitting portions, are used in combination such that the directions of the array of openings are orthogonal to each other. Using a source grating having a structure similar to this shielding grating enables spatial coherence of X-rays in the two directions (the directions of the array of the transmitting portions) to be improved.

The shielding grating described in Physical Review Letters 105 (2010) 248102 has a grating where rectangular shielding portions and rectangular transmitting portions are alternately arranged. Irradiating such a grating with X-rays, which diffuse and spread, results in the X-rays farther away from the optical axis of the X-ray interferometer entering the shielding portion of the source grating at an angle, resulting in vignetting of X-rays. This vignetting results in reduced intensity of the self-image, depending on the distance of the X-rays from the optical axis. Hereinafter, X-rays which diverge and spread may be referred to as "divergent X-rays".

SUMMARY OF THE INVENTION

It is thus desired to address the problems discussed above.

The present invention in its first aspect provides a source grating as specified in claims 1 to 4.

The present invention in its second aspect provides an interferometer as specified in claims 5 to 13.

The present invention in its third aspect provides an object information acquisition system as specified in claims 14 and 15.

The present invention in its fourth aspect provides radiation means as specified in claim 16.

Further features of the present invention will become apparent from the following description of exemplary embodiments with reference to the attached drawings.

BRIEF DESCRIPTION OF THE DRAWINGS

Fig. 1 is a schematic cross-sectional view of an object information acquisition system according to a first embodiment.

Fig. 2A is a schematic diagram of a diffraction grating according to a first exemplary embodiment.

Fig. 2B is a schematic diagram of a self-image according to the first exemplary embodiment.

Fig. 2C is a schematic diagram of a shielding grating according to the first exemplary embodiment.

Fig. 3 is a schematic diagram of a source grating according to first through fourth embodiments.

Fig. 4A is a schematic diagram of a source grating according to the first exemplary embodiment as viewed from the shielding grating side.

Fig. 4B is a schematic diagram of the source grating according to the first exemplary embodiment as viewed from the X-ray source side.

Figs. 5A and 5B are schematic diagrams of the source grating and a supporting part according to the first exemplary embodiment.

Figs. 6A through 6C are schematic diagrams of the supporting part according to a modification of the first exemplary embodiment.

Fig. 7A is a schematic diagram of first and second sub-source gratings according to the first embodiment.

Fig. 7B is a schematic diagram of first and second sub-source gratings according to the first embodiment.

Figs. 8A through 8D are schematic diagrams of first and second sub-source gratings according to the first embodiment.

Fig. 9 is a schematic diagram of a diffraction grating according to a second embodiment.

Fig. 10 is a schematic diagram of a shielding grating according to the second embodiment.

Fig. 11 is a schematic diagram of a diffraction grating according to a fourth embodiment.

DESCRIPTION OF THE EMBODIMENTS

A two-dimensional source grating which exhibits less vignetting when irradiated by divergent X-rays than that described in Physical Review Letters 105 (2010) 248102, an X-ray interferometer having this source grating, and an object information acquisition system, will be described by way of example with reference to the attached drawings. Members which are the same in the drawings are denoted by the same reference numerals, and redundant description will be omitted to avoid repetition.

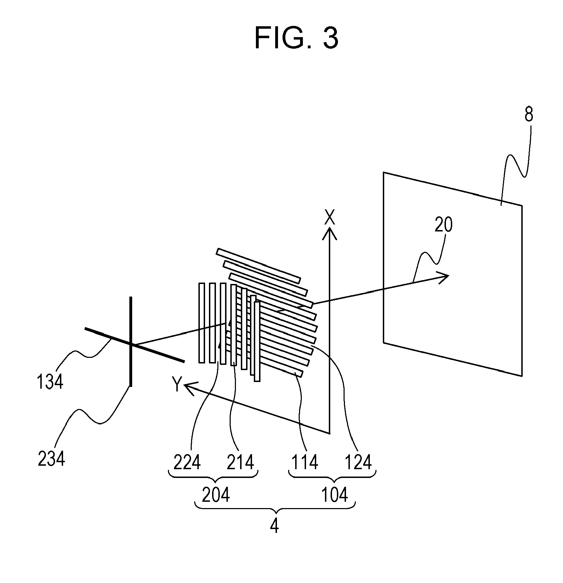

First through fourth embodiments will be described below. The first through fourth embodiments have in common a configuration where a source grating 4 includes a first sub-source grating 104 and a second sub-source grating 204 (see Fig. 3). In each embodiment, the first sub-source grating 104 has first transmitting portions 124 and first shielding portions 114 alternately arranged in a first direction (X direction), and the second sub-source grating 204 has second transmitting portions 224 and second shielding portions 214 alternately arranged in a second direction (Y direction). The first sub-source grating 104 has a shape curved as to the first direction (i.e. out of the plane of the first direction), and the second sub-source grating 204 has a shape curved as to the second direction. In other words, the first and second sub-source gratings 104 and 204 have shapes curving as to the directions in which the transmitting portions and shielding portions are arranged. Note that the expression "curving as to the periodicity direction" means coordinate change in a third dimension (Z direction) in accordance with change in coordinates in the periodicity direction which is in the X-Y plane. That is to say, a shape curving as to the first direction is a shape of which the z coordinates change in accordance with change in x coordinates, and a shape curving as to the second direction is a shape of which the z coordinates change in accordance with change in y coordinates. The third dimension is a direction which perpendicularly intersects the first direction and second direction. The first direction and second direction intersect at an angle which is preferably perpendicular or close to perpendicular and are preferably in the X-Y plane defined by the X- and Y-dimensions.

The first and second sub-source gratings 104 and 204 each preferably have shapes curved as if following the side face of an imaginary cylinder having an axis perpendicular to the direction of the respective array, thereby forming a cylindrical face. This cylinder longitudinal axis is a line segment connecting the centers of the top and bottom circular faces of the imaginary cylinder, and also is the rotation axis thereof when the cylinder is thought of as a rotating body. Thus, a line following the surface of each sub-source grating has a radius of curvature equal to the radius of such an imagined cylinder, the cylinder for the first sub-source grating 104 having its longitudinal axis in the Y-direction and the cylinder for the second sub-source grating 204 having its longitudinal axis in the X-direction, as can be seen in Fig. 3.

The first and second sub-source gratings 104 and 204 each having curved shapes following a cylindrical face preferably have an arc-shaped cross-section, taken parallel to the end faces of the cylinder, such that the distance along the X-ray axis 20 from the X-ray source to the first and second sub-source gratings 104 and 204 (i.e. the radius of curvature of the arc defined by the sub-source gratings) is a distance roughly equivalent to the radius of the cylinder. The longitudinal axis of this cylinder will be referred to as the "axis of curvature", and the radius of the end face of the cylinder (and thereby of the arc defined by the sub-source gratings) will be referred to as "radius of curvature". In an arrangement where the first and second sub-source gratings 104 and 204 each have a radius of curvature which is equal to the distance from the X-ray source, the axes of curvature of the first and second sub-source gratings 104 and 204 pass through the X-ray source, and are perpendicular to the X-ray axis. Hereinafter, the axis of curvature of the first sub-source grating 104 will be referred to as "first curvature axis 134" as shown in Fig. 3, and the axis of curvature of the second sub-source grating 204 will be referred to as "second curvature axis 234". While the curvature radii of the first and second sub-source gratings 104 and 204 are preferably constant in the range where the transmitting portions are arranged, the curvature radii may permissibly change as much as 10%. Note that the first and second sub-source gratings 104 and 204 in the following embodiment have such curved shapes.

The second sub-source grating 204 is situated on the inner side of the curvature of the first sub-source grating 104, so the first sub-source grating 104 is situated on the outer side of the curvature of the second sub-source grating 204. Assuming that the first and second sub-source gratings 104 and 204 have the curved shape following the side of the cylindrical face as described above, the first curvature axis 134 is situated on the inner side of the curvature of the second sub-source grating 204, and the second sub-source grating 204 is situated between the first curvature axis 134 and the first sub-source grating 104. That is to say, of the two grating faces which the second sub-source grating 204 has, the first curvature axis 134 and second curvature axis 234 exist on the side of one, concave face (the face on the near side toward the left in Fig. 3), and the first sub-source grating 104 exists on the side of the other, convex face. Further, of the two grating faces which the first sub-source grating 104 has, the second sub-source grating 204, first curvature axis 134, and second curvature axis 234 exist on the side of one, concave face. The term "grating faces" refer to the two surfaces of the grating, one facing the X-ray source and the other facing the detector when installed in the interferometer. In the case when one sub-source grating 204 is closer to the X-ray source than the other 104, the radii of curvature of the two sub-source gratings are different in order to allow for the difference in distance from the X-ray source. The longitudinal axes 134, 234 of the respective imaginary cylinders still coincide at the position of the X-ray source in this embodiment, but the nearer sub-source grating 204 will have a greater curve in its arc to accommodate the slightly smaller radius of curvature.

The grating faces have a grating pattern formed of the array of transmitting portions and shielding portions. The source grating 4 has a grating pattern of the transmitting portions and shielding portions arranged in two intersecting directions. The grating pattern is formed of the transmitting portions 124 and shielding portions 114 of the first sub-source grating 104 and the transmitting portions 224 and shielding portions 214 of the second sub-source grating 204.

The distance between the first curvature axis 134 and the second sub-source grating 204 in this arrangement is smaller than the distance between the first curvature axis 134 and the first sub-source grating 104, and the distance between the second curvature axis 234 and the second sub-source grating 204 is smaller than the distance between the second curvature axis 234 and the first sub-source grating 104. Note however, that the distance between the first or second curvature axis to the first or second sub-source grating is a distance measured along a perpendicular line drawn from the first or second sub-source grating to a point on the first or second curvature axis.

The radius of curvature of the second sub-source grating 204 is smaller than the radius of curvature of the first sub-source grating 104. If the shielding portions 114 of the first sub-source grating 104 are formed with a thickness perpendicular to the grating face, and the center of the focal point of the X-ray source which emits the divergent X-rays is situated on the first curvature axis 134, the thickness direction of the shielding portions 114 of the first sub-source grating 104 and the traveling direction of the X-rays agree throughout the extent of the array of shielding portions 114. In other words, the X-ray travelling direction is normal to the grating face. Accordingly, vignetting of X-rays caused by the first sub-source grating 104 can be effectively diminished. In the same way, if the center of the focal point of the X-ray source which emits the divergent X-rays is situated on the second curvature axis 234, vignetting of X-rays caused by the second sub-source grating 204 can be effectively diminished. Accordingly, the first curvature axis 134 and the second curvature axis 234 preferably intersect, as illustrated in Fig. 3. Further, the center of the focal point of the X-ray source is preferably situated on the point of intersection of the first curvature axis 134 and second curvature axis 234.

The second sub-source grating 204 may alternatively or additionally be curved in the first direction X, and the first sub-source grating 104 may be curved in the second direction Y. Note however, that curvature of the second sub-source grating 204 in the first direction hardly affects diminishing of vignetting, and curvature of the first sub-source grating 104 in the second direction hardly affects diminishing of vignetting, either. Accordingly, curvature of the second sub-source grating 204 in the first direction may be smaller than the curvature in the second direction, and curvature of the first sub-source grating 104 in the second direction may be smaller than the curvature in the first direction. Sub-source gratings where curvature in the second direction is smaller than curvature in the first direction, or where curvature in the first direction is smaller than curvature in the second direction, are easier to fabricate as compared with a spherical segment shape where curvature is the same in both the first and second directions. Embodiments and exemplary embodiments will be described next.

First Embodiment

A first embodiment will be described regarding an object information acquisition system having an interferometer which performs two-dimensional Talbot-Lau X-ray interferometry. Note that in the present Specification, the term "X-rays" means electromagnetic waves having energy of 2 keV or more but 100 keV or less.

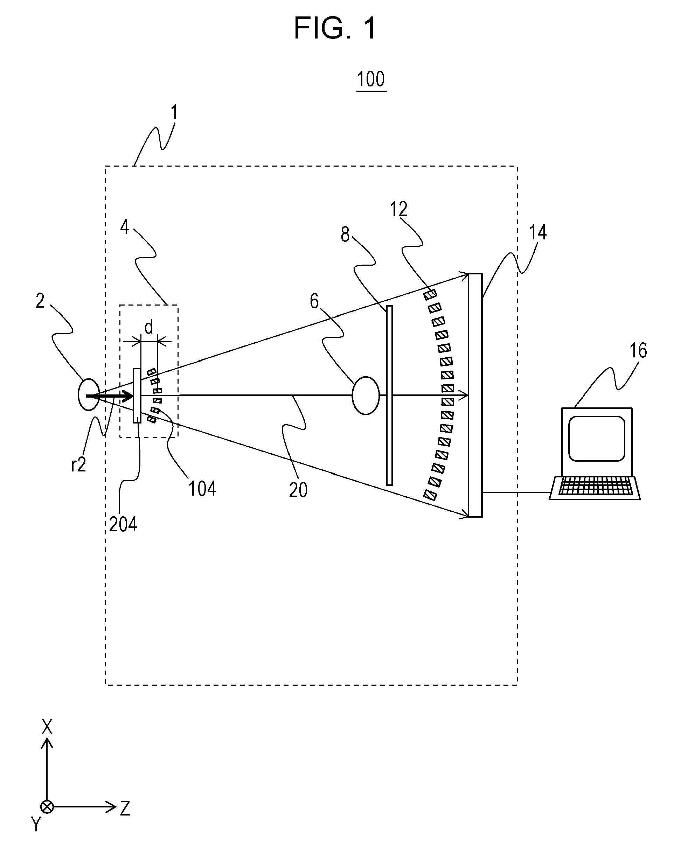

Fig. 1 is a schematic cross-sectional view illustrating a configuration example of an object information acquisition system 100 according to the present embodiment. The object information acquisition system 100 illustrated in Fig. 1 includes an interferometer 1, an X-ray source 2 which irradiates the interferometer 1 with X-rays, and a calculation unit 16 which obtains information of an object 6 based on detection results of a detector 14 which the interferometer 1 has. The interferometer 1 includes the source grating 4 which splits X-rays from the X-ray source 2, a diffraction grating 8 which forms an interference pattern (also called the "self-image") by diffracting X-rays from the source grating 4, a shielding grating 12 which shield a part of the X-rays forming the self-image, and the detector 14 to detect X-rays from the shielding grating 12.

The X-ray source 2 emits X-rays to the source grating 4 so as to irradiate the source grating 4 with the X-rays. The X-rays which the X-ray source 2 emits are X-rays which diverge in two directions as a cone beam (hereinafter, also referred to as "divergent X-rays").

The source grating 4 improves the spatial coherence of the X-rays by splitting the X-rays from the X-ray source 2. It is sufficient for the spatial coherence of the X-rays to be improved to where an interference pattern can be formed by diffracting the X-rays from the source grating 4 at the diffraction grating 8.

The source grating 4 thus has the first sub-source grating 104 and second sub-source grating 204, where the first sub-source grating 104 extends in the first direction X and curves relative to X, and the second sub-source grating 204 extends in the second direction Y and curves relative to that second direction Y. The first sub-source grating 104 improves spatial coherence of X-rays in a third direction in the X-Y plane which is a periodicity direction of the diffraction grating 8, described later. More specifically, the spatial coherence is determined by the width of the transmitting portions 124 of the first sub-source grating 104 in the third direction. Designating "a" to represent the width of the transmitting portions 124 in the first direction X, the width of the transmitting portions 124 in the third direction Z when the first direction and third direction match is also "a", and when the first direction and third direction are offset, it is greater than "a". Accordingly, the first direction and third direction preferably match, in order to effectively improve spatial coherence in the third direction. However, this is not necessarily so if adjusting spatial coherence by adjusting the width of transmitting portion of source grating. Also, the second sub-source grating 204 improves spatial coherence of X-rays in a fourth direction in the X-Y plane which is another periodicity direction of the diffraction grating 8, described later. More specifically, the spatial coherence is determined by the width of the transmitting portions 224 of the second sub-source grating 204 in the fourth direction.

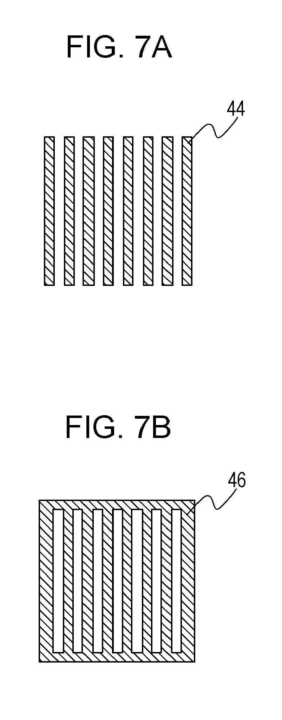

The first and second sub-source gratings 104 and 204 may have multiple band-shaped shielding portions 44 as illustrated in Fig. 7A, or may have a shielding portion 46 where multiple band-shaped shielding portions are linked as illustrated in Fig. 7B. The shielding portions are formed of a material having a high shielding rate (absorptivity) of X-rays, and may be formed using gold, lead, alloys including gold, or the like, for example. The arrangement in Fig. 7A where the shielding portions are separated from each other is advantageous with regard to reducing costs, since the amount of material used can be reduced. On the other hand, the arrangement in Fig. 7B where the shielding portions are linked is advantageous with regard to suppressing pitch shifting, since distortion of the shielding portion is suppressed even if formed to be hollow (i.e. with nothing between them).

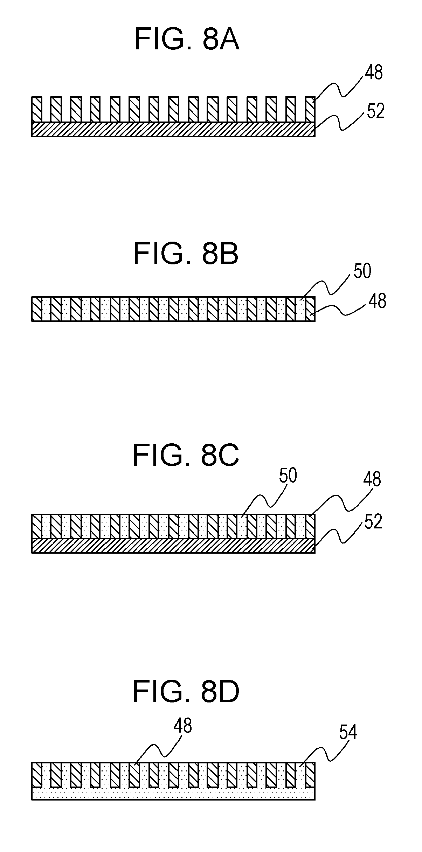

Figs. 8A through 8D are cross-sectional views of the first or second sub-source gratings 104 or 204, showing how shielding portions 48 are arranged in either sub-source grating. The transmitting portions of the first and second sub-source gratings 104 and 204 may be "hollow" as illustrated in Fig. 8A, or may be filled with a filler 50 having a low X-ray absorbance, as illustrated in Fig. 8B. Alternatively or additionally, the first and second sub-source gratings 104 and 204 may have a substrate 52 supporting the shielding portions 48, as illustrated in Figs. 8A and 8C. Note however, that the substrate 52 also is preferably formed of a material having a low X-ray absorbance. The filler 50 and substrate 52 suppress distortion of the shielding portions 48, and reduce pitch shifting. The first and second sub-source gratings 104 and 204 may use one or the other of the filler 50 and substrate 52, or may use both. The filler 50 and substrate 52 may be formed of different materials such as illustrated in Fig. 8C, or a substrate 54 may be used where the filler and the substrate are integrally formed of the same material as illustrated in Fig. 8D. The material for the filler 50 and substrate 52 may be a resin material, a semiconductor such as silicon, or a metal with good X-ray transmittance such as aluminum.

The first sub-source grating 104 and the second sub-source grating 204 are situated to be distanced from each other by a distance d. This distance d is the distance between the first sub-source grating 104 and the second sub-source grating 204 along the X-ray optical axis (also simply "X-ray axis") as measured from a center point through the width of each sub-source grating. The X-ray optical axis is a line segment between the center of the focal point of the X-ray source, and the center of the X-ray irradiation range on the detection surface of the detector 14. In a case where source gratings are not installed in the interferometer 1, a perpendicular is drawn from the first sub-source grating 104 to the intersection point of the first curvature axis 134 and the second curvature axis 234, and the distance between the first sub-source grating 104 and second sub-source grating 204 upon this line segment is taken as the distance therebetween. In a case where the first curvature axis 134 and the second curvature axis 234 do not intersect, a perpendicular is drawn from the first sub-source grating 104 to the intersection point of the line which is parallel to first curvature axis 134 projected upon the second curvature axis 234.

The present embodiment enables vignetting of X-rays by the source grating 4 to be effectively diminished by situating the center of the focal point of the X-ray source 2 at the intersection between the first curvature axis 134 and second curvature axis 234. To this end, the expression r1 = r2 + d is established, where r1 represents the radius of curvature of the first sub-source grating 104 and r2 represents the radius of curvature of the second sub-source grating 204. The center of the focal point of the X-ray source 2 is also situated so that the distance to the surface of the second sub-source grating 204 at the X-ray source side (inner, concave side of the curved shape) on the X-ray axis is r2. In a case where the first curvature axis 134 and the second curvature axis 234 do not intersect, the center of the focal point of the X-ray source 2 is preferably situated between the first curvature axis 134 and the second curvature axis 234 in the X-axial direction. Further, in the x-y plane, the center of the focal point of the X-ray source 2 is preferably situated near the intersection point of a projected image of the first curvature axis formed by projecting the first curvature axis 134 upon the second curvature axis 234, and the second curvature axis 234.

When performing general Talbot-Lau interferometry, the light portions and dark portions of the interference pattern formed by X-rays emitted from multiple transmitting portions are overlaid by a source grating. That is to say, bright portions and dark portions of an interference pattern formed by X-rays emitted from certain transmitting portions of a source grating are overlaid on bright portions and dark portions of an interference pattern formed by X-rays emitted from other transmitting portions of the source gratin, respectively. Thus, the contrast of the interference pattern formed on the shielding grating (the interference pattern formed by overlaying interference patterns formed by X-rays emitted from multiple transmitting portions) has higher contrast than the contrast of an interference pattern formed by X-rays emitted from a single transmitting portion. In a case where a source grating has a transmitting portion A and a transmitting portion B, the light portions of the interference pattern formed by X-rays from the transmitting portion A being diffracted at the diffraction grating, and the light portions of the interference pattern formed by X-rays from the transmitting portion B being diffracted at the diffraction grating are overlaid. This holds true for the dark portions as well. The conditions for light portions and dark portions of interference patterns formed by X-rays emitted from multiple transmitting portions to be overlaid on each other are called "Lau conditions", as given in Expression (1)

$$P0 = Ps \times L/z \quad \text{Expression (1)}$$

where P0 represents the pitch of the source grating, Ps represents the pitch of the self-image, L represents the distance between the source grating and the diffraction grating, and z represents the distance between the diffraction grating and the self-image.

The pitch of the source grating means the pitch of the transmitting portions of the source gratings (the pitch in the direction of the array of diffraction grating pattern). The distance between the diffraction grating and the self-image is the distance between the diffraction grating and the shielding grating in a case of using shielding grating, and is the distance between the diffraction grating and the detector in a case of not using shielding grating and detecting the self-image directly instead. The pitch of the self-image is the pitch of light portions in the self-image on the shielding grating in a case of using shielding grating, and is the pitch of light portions in the self-image on the detector in a case of not using shielding grating and detecting the self-image directly instead.

In a case where the first sub-source grating 104 and the second sub-source grating 204 are positioned away from each other as in the present embodiment, the distance (L) between the first sub-source grating 104 and the diffraction grating 8, and the distance (L + d) between the second sub-source grating 204 and the diffraction grating 8 are not the same. Accordingly, if the pitch P0a of the transmitting portions 124 of the first sub-source grating 104 in the third direction and the pitch P0b of the transmitting portions 224 of the second sub-source grating 204 in the fourth direction are the same, at least one of the first and second sub-source gratings 104 and 204 will be situated at a position which does not satisfy the above-described Lau conditions. This means that for example, the light portions of the interference pattern formed by the X-rays from the transmitting portion A and the light portions of the interference pattern formed by the X-rays from the transmitting portion B will be overlaid in a shifted manner. This shift amount depends on the magnitude of d. The present inventors have found by study that if d is greater than 4 mm, reduction in contrast of the interference pattern caused by offsetting of the interference patterns becomes non-negligible.

Accordingly, the pitch P0a of the first sub-source grating 104 is formed so as to be smaller than the pitch P0b of the second sub-source grating 204. This makes the distance at which the Lau conditions are satisfied in the fourth direction shorter than the distance at which the Lau conditions are satisfied in the third direction, so the offset (difference) between the arrangement position of the first sub-source grating 104 and second sub-source grating 204, and the positions where the Lau conditions are satisfied, is diminished. Accordingly, reduction in contrast of the interference pattern caused by the distance d between the first sub-source grating 104 and the second sub-source grating 204 is also diminished. The pitches P0a and P0b of the first and second sub-source gratings 104 and 204 are preferably determined in accordance with the distance d between the first sub-source grating 104 and the second sub-source grating 204. In a case where the pitch P1a of the diffraction grating 8 in the third direction and the pitch P1b in the fourth direction are the same, the pitch P0a of the first sub-source grating 104 is preferably smaller than the pitch P0b of the second sub-source grating 204, as can be seen from the following Expression (2). When Expression (2) is satisfied, both the first sub-source grating 104 and the second sub-source grating 204 can be situated at positions where the Lau conditions are satisfied.

$$P0a = P0b \times (L + z) / (L + d + z) \quad \text{Expression (2)}$$

Expression (2) is derived from the following Expressions (1-a), (1-b), (3), and (4) which are derived from Expression (1).

$$P0a = Psa \times L / z \quad \text{Expression (1-a)}$$

$$P0b = Psb \times (L + d) / z \quad \text{Expression (1-b)}$$

$$P1a = A \times Psa \times L / (L + Z) \quad \text{Expression (3)}$$

$$P1b = A \times Psb \times (L + d) / (L + d + z) \quad \text{Expression (4)}$$

where A is a constant determined by the type of diffraction grating 8 and Psa and Psb are pitches of two directions of the self-image.

For example, if the diffraction grating 8 is a phase grating, and the phase shift amount between X rays which have been transmitted through a second phase modulation region and X rays which have been transmitted through a first phase modulation region is $\pi$, A is 2. If the phase shift amount is $\pi/2$, A is 1. Also, if the diffraction grating 8 is an amplitude grating, A is 1.

Expressions (3) and (4) are derived from the following Expression (5).

$$P1 = A \times Ps \times L / (L + Z) \quad \text{Expression (5)}$$

Hereinafter, the term "pitch of first sub-source grating 104" means the pitch of the transmitting portions 124 of the first sub-source grating 104 in the third direction, and the term "pitch of second sub-source grating 204" means the pitch of the transmitting portions 224 of the second sub-source grating 204 in the fourth direction. Even if the pitches P0a and P0b of the first and second sub-source gratings 104 and 204 do not satisfy the above Expression (2), a reduction in contrast of the interference pattern caused by the distance d can be diminished if the pitch P0a of the first sub-source grating 104 is smaller than the pitch P0b of the second sub-source grating 204 as described above. In a case where the pitches P0a and P0b of the first and second sub-source gratings 104 and 204 do not satisfy the above Expression (2), the actual pitch of the first sub-source grating 104 is preferably closer to the ideal pitch of the first sub-source grating 104 as compared to the ideal pitch of the second sub-source grating 204. Also, the actual pitch of the second sub-source grating 204 is preferably closer to the ideal pitch of the second sub-source grating 204 as compared to the ideal pitch of the first sub-source grating 104. The ideal pitches of the first and second sub-source gratings 104 and 204 are the P0a and P0b calculated from Expression (2). If the second sub-source grating 204 is curved in the first direction, or if the first sub-source grating 104 is curved in the second direction, the distance between the first and second sub-source gratings 104 and 204 can be reduced as compared to a case where the first sub-source grating 104 is only curved in the first direction and the second sub-source grating 204 is only curved in the second direction.

The diffraction grating 8 diffracts X-rays from the source grating 4, and creates an interference pattern called a self-image, by the Talbot effect. The diffraction grating 8 is not restricted in particular, as long as a two-dimensional self-image where X-rays from the source grating 4 have been diffracted into arrayed light and dark portions can be formed. For example, a phase-type diffraction grating which cyclically modulates the phase of the X-rays (hereinafter also referred to as "phase grating") may be used. Alternatively, an amplitude-type diffraction grating which cyclically modulates the amplitude of the X-rays (hereinafter also referred to as "amplitude grating"), may be used. The periodicity directions of the modulation pattern of the diffraction grating 8 (hereinafter also referred to as "periodicity direction of diffraction grating 8" are in the third direction and fourth direction. Note that the modulation pattern is a pattern formed by a first phase modulation region and a second phase modulation region in the case of using a phase grating for the diffraction grating 8, and it is a pattern formed by transmitting portions and shielding portions in the case of using an amplitude grating for the diffraction grating 8. The modulation pattern may be a checkerboard pattern, or may be a mesh-like pattern (a pattern where two striped patterns are overlaid approximately perpendicular to each other). The third direction and fourth direction intersect, preferably perpendicularly. To say that the periodicity directions of a modulation pattern are in the third direction and the fourth direction means that the first phase modulation region and the second phase modulation region are arranged in the third direction and the fourth direction. In the case where the diffraction grating 8 is an amplitude grating, this means that the transmitting portions and shielding portions are arranged in the third direction and the fourth direction. The term "modulation pattern pitch" means the pitch of the first phase modulation region in the case where the diffraction grating 8 is a phase grating, and means the pitch of the transmitting portions in the case where the diffraction grating 8 is an amplitude grating.

Also, a planar diffraction grating such the diffraction grating 8 illustrated in Fig. 1 may be used, or may be curved as a spherical segment shape (bowl shape). Further, two one-dimensional diffraction gratings may be overlaid to function as a two-dimensional diffraction grating, as with the source grating 4. In this case, the distance between the one-dimensional diffraction gratings is preferably 4 mm or less in the present embodiment, and more preferably the diffraction gratings are in contact with each other.

The shielding grating 12 includes transmitting portions which transmit X-rays, and shielding portions which shield X-rays, arranged in a fifth direction in the X-Y plane and a sixth direction also in the X-Y plane, and is disposed where the self-image is formed. In a case where the pitch of the self-image and the pitch of the shielding grating 12 are different, or where the periodicity directions (third direction with respect to the fifth direction, and fourth direction with respect to the sixth direction) are offset, a moire pattern occurs because of the combination of the self-image and the shielding grating 12. Note that the term "shielding grating pitch" means the pitch of the transmitting portions of the shielding grating 12.

For example, in a case where the periodicity direction of the self-image and the periodicity direction of the shielding grating are equal (i.e., the third direction and fifth direction are parallel, and the fourth direction and sixth direction are parallel), but the pitch is different, a parallel moire pattern occurs. The pitch of a parallel moire pattern in the third direction is decided by the difference between the pitch of the self-image and the pitch of the shielding grating in the third direction. In the same way, the pitch of the moire pattern in the fourth direction is decided by the difference between the pitch of the self-image and the pitch of the shielding grating in the fourth direction. In a case where the pitch of the self-image in the third direction and the pitch of the shielding grating in the fifth direction are equal, and the third direction and the fifth direction intersect, the pitch of the moire pattern is determined by the angle with which the third direction and the fifth direction intersect. In the same way, in a case where the pitch of the self-image in the fourth direction and the pitch of the shielding grating in the sixth direction are equal, and the fourth direction and the sixth direction intersect, the pitch of the moire pattern is determined by the angle at which the fourth direction and the sixth direction intersect. Note that in a case where the periodicity direction of the self-image and the periodicity direction of the shielding grating are equal, a moire pattern having a periodicity direction equal to that of the self-image will be generated, but in a case where the periodicity direction of the self-image and the periodicity direction of the shielding grating are different, the moire pattern having a periodicity direction different from that of the self-image may be generated.

The moire pattern period may be shorter than one side of the detection range of the detector 14, or it may be longer. In the present description, a pattern generated in a case where the pitch of the self-image and shielding grating is the same and the periodicity direction is also the same will give rise to a moire pattern with an infinitely great period, and will be dealt with as a type of moire pattern.

In Fig. 1, the shielding grating 12 has a spherical segment shape curved in the x direction and in the y direction, thereby diminishing vignetting of X-rays caused by the shielding grating. However, depending on the size and structure of the shielding grating, the effects of vignetting of X-rays may be negligible even if the shielding grating has a planar shape, so in such a case a planar shielding grating may be used.

The detector 14 obtains intensity distribution information of the moire pattern by detecting the X-rays from the shielding grating 12. Placing the object 6 between the source grating 4 and the diffraction grating 8, or between the diffraction grating 8 and the detector 14 (in a case of using the shielding grating 12, between the source grating 4 and diffraction grating 8 or between the diffraction grating 8 and shielding grating 12) causes the phase and intensity of X-rays which have passed through the object 6 to be changed thereby. Accordingly, the self-image formed by the X-rays which have passed through the object 6 have the information of the object 6. That is to say, by placing the object 6 between the source grating 4 and the detector 14, the X-rays detected at the detector 14 include information of the object 6. The interferometer 1 according to the present embodiment forms a moire pattern from X-rays including information of the object 6, and detects the X-rays forming the moire pattern. Thus, object information can be obtained.

Description has been made so far with regard to a case of forming a moire pattern using a shielding grating, and imaging the moire pattern. However, if the spatial resolution of the detector 14 is high enough to detect the pattern of the self-image directly, the X-rays making up the self-image may be directly detected without using the shielding grating 12. In this case, the interferometer 1 obtains object information by obtaining intensity distribution information of the self-image formed by X-rays including the object information. The self-image and the moire pattern are both interference patterns, so regardless of whether the shielding grating 12 is to be used, the interferometer 1 according to the present embodiment obtains object information by obtaining intensity distribution information of the interference pattern formed by X-rays including the object information.

The calculation unit 16 obtains the object information from the detection results obtained by the detector 14. Examples of object information include information relating to phase change of X-rays caused by the object, information relating to intensity change of X-rays caused by the object (i.e., the amount of X-rays absorbed by the object), and scattering of X-rays caused by the object (which may include reflection). The intensity distribution of the moire pattern (or self-image) formed by X-rays including object information is also a type of object information itself, which can be obtained without going through calculation by the calculation unit 16.

The method by which the object information is obtained is not restricted in particular. For example, information relating to phase change of X-rays caused by the object may be obtained by Fourier transform of detection results such as described in International Publication No. WO 2010/050483 or by fringe scanning (also called phase shift) such as described in International Publication No. WO 04/058070. Further, a table may be compiled beforehand indicating the relationship between the detection results and the phase change of X-rays caused by the object, and object information may be obtained by referencing that table. The calculation unit 16 may output the obtained object information to an image display apparatus, so as to display a differential phase image or phase image of the object created from information relating to phase change of X-rays caused by the object, a scattering image created from information relating to scattering of the X-rays caused by the object, or the like.

Second Embodiment

An X-ray interferometer which differs from the first embodiment will be described in the second embodiment. The X-ray interferometer 1 according to the present embodiment differs from the first embodiment in that the pitch of the first sub-source grating 104 and the pitch of the second sub-source grating 204 are the same, while the pitch in the third direction of the modulation pattern which the diffraction grating 8 has and the pitch in the fourth direction thereof differ. The source grating 4 is the same as the source grating 4 in the first embodiment except that the pitch of the first sub-source grating 104 and the pitch of the second sub-source grating 204 are the same. Other configurations are the same as with the first embodiment, so description thereof will be omitted here.

In a case where the pitch of the first sub-source grating 104 and the pitch of the second sub-source grating 204 are the same, the greater the distance d between the first and second sub-source gratings 104 and 204 is, the farther at least one of the first and second sub-source gratings 104 and 204 will be situated from a position where the Lau conditions are satisfied. This reduces contrast of the self-image.

In the first embodiment, the pitch of the first sub-source grating 104 is made to be smaller than the pitch of the second sub-source grating 204, thereby diminishing reduction in contrast of the self-image. In the present embodiment, the pitch of the first sub-source grating 104 and the pitch of the second sub-source grating 204 are designed to be the same, but instead a pitch P1a of the diffraction grating 8 in the third direction is made to be greater than a pitch P1b thereof in the fourth direction. This causes the pitch of the self-image in the third direction to be greater than the pitch of the self-image in the fourth direction, so that the distance where Lau conditions are satisfied can be made shorter. That is to say, the present embodiment diminishes the offset (difference) between the arrangement position of the first sub-source grating 104 and second sub-source grating 204, and the positions where the Lau conditions are satisfied, by making the pitch of the diffraction grating 8 in the third direction to be greater than the pitch thereof in the fourth direction. This diminishes reduction in the contrast of the interference pattern caused by the distance d between the first sub-source grating 104 and second sub-source grating 204. The pitch of P1a of the diffraction grating 8 in the third direction and the pitch of P1b thereof in the fourth direction are preferably decided according to the distance d between the first and second sub-source gratings 104 and 204. More specifically, both of the first sub-source grating 104 and second sub-source grating 204 can be situated at position satisfying the Lau conditions when the following Expression (6) is satisfied.

$$P1a = P1b \times (L + d + z) / (L + z) \quad \text{Expression (6)}$$

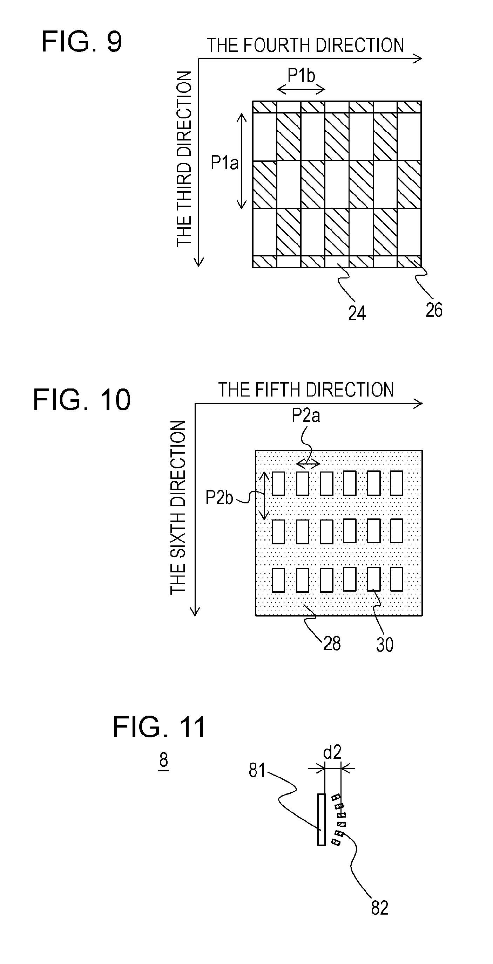

Now, since $(L + d + z) / (L + z)$ is greater than 1, $P1a > P1b$ holds. An example of a modulation pattern which the diffraction grating 8 according to the present embodiment has is illustrated in Fig. 9.

Note that even if the pitches of the diffraction grating 8 in the third and fourth directions do not satisfy Expression (6), the above arrangement where the pitch of the diffraction grating 8 in the third direction is greater than the pitch thereof in the fourth direction as described above enables reduction in contrast of the interference pattern caused by the distance d to be diminished. In a case where the pitches of the diffraction grating 8 in the third and fourth directions do not satisfy the above Expression (6), the actual pitch of the diffraction grating 8 in the third direction is preferably closer to the ideal pitch of the diffraction grating 8 in the third direction as compared to the ideal pitch of the diffraction grating 8 in the fourth direction. Also, the actual pitch of the diffraction grating 8 in the fourth direction is preferably closer to the ideal pitch of the diffraction grating 8 in the fourth direction as compared to the ideal pitch of the diffraction grating 8 in the third direction. The ideal pitches of the diffraction grating 8 in the third and fourth directions are the P1a and P1b calculated from Expression (6).

Third Embodiment

An X-ray interferometer which differs from the first and second embodiments will be described in the third embodiment. The X-ray interferometer 1 according to the present embodiment differs from the first and second embodiments in that the pitch of the first sub-source grating 104 is smaller than the pitch of the second sub-source grating 204, and also the pitch in the third direction of the modulation pattern which the diffraction grating 8 has and the pitch in the fourth direction thereof differ. Other configurations are the same as with the first and second embodiments, so description thereof will be omitted here.

In a case of forming a self-image using divergent X-rays, the pitch of the self-image changes according to the pitch of the modulation pattern of the diffraction grating 8 and the magnification. The magnification is decided by the ratio of the distance between the source grating 4 and the diffraction grating 8 to the distance between the diffraction grating 8 and the formation of the self-image (in a case of using the shielding grating 12, this is the distance between the diffraction grating 8 and the shielding grating 12, and in a case of directly imaging the self-image, the distance between the diffraction grating 8 and the detector 14). That is to say, in a case where the first sub-source grating 104 and second sub-source grating 204 are displaced away from each other, the magnification of a self-image formed by X-rays with improved coherency caused by the first sub-source grating 104 and the magnification of a self-image formed by X-rays with improved coherency caused by the second sub-source grating 204 are not the same. Accordingly, there is difference in the pitch of the self-image in the third direction and the pitch of the self-image in the fourth direction. Note that pitch of the self-image means the pitch of the self-image on the shielding grating 12 in a case where the imaging device has a shielding grating, and means the pitch of the self-image on the detector 14 in a case where the imaging device does not have a shielding grating.

Accordingly, the present embodiment is arranged such that the pitch of the modulation pattern in the third direction and the pitch of the modulation pattern in the fourth direction are made to be different, in accordance with the difference in magnification of the self-image. Accordingly, the difference between the pitch of the self-image in the third direction and the pitch of the self-image in the fourth direction can be reduced, preferably to a level of being negligible. For example, the pitch of the self-image in the third direction is preferably within a range of 1.05 times to 0.95 times that in the fourth direction. Also, making the pitch of the second sub-source grating 204 to be smaller than the pitch of the first sub-source grating 104 in accordance with the pitch of the self-image in the third and fourth directions reduces shifting of the positions of the first sub-source grating 104 and second sub-source grating 204 from positions where the Lau conditions are satisfied.

This is now described in further detail. Difference between the pitch of the self-image in the third direction and the pitch of the self-image in the fourth direction can be reduced by making the pitch P1a of the diffraction grating 8 in the third direction to be smaller than the pitch P1b thereof in the fourth direction. The pitch of the self-image in the third direction and the pitch of the self-image in the fourth direction are equal when the pitch P1a of the modulation pattern in the third direction satisfies the following Expression (7) which has been derived by substitution of Psa = Psb in Expressions (3) and (4).

$$\mathtt{P1a = P1b \times L(L + d+ +z) \; / \; (L + z) \; (L + d) \quad Expression \; (7)}$$

In a case where the pitch of the modulation pattern in the third direction satisfies the above Expression (7), the pitch of the self-image in the third direction and the pitch of the self-image in the fourth direction are equal. Accordingly, a moire pattern where the pitches in the two intersecting directions are the same can be formed even if the pitch of the shielding grating 12 in the third direction and the pitch thereof in the fourth direction are the same. When performing Fourier transform at the time of calculating subjected information at the calculation unit 16, a first-order spectrum (a peak having phase information of the object) appears in the Fourier space. When performing Fourier transform of a moire pattern where pitches in the two intersecting directions are equal, coordinates where the four first-order spectrums appear in the Fourier space are in concentric circles, and further line segments obtained by connecting two sets of first order spectrums in a mirror relation across a point of origin are orthogonal. Accordingly, object information can be obtained without having to change the method used in interferometers performing Talbot X-ray interferometry according to the related art. In a case of performing fringe scanning, the relative position between the self-image and shielding grating 12 is shifted in the pitch direction of the self-image by 1/n (where n is an integer of 3 or greater) of the period of the self-image, and X-rays are detected n times. If a moire pattern is formed where pitches in the two directions are the same, the variation in relative position per detection (moving amount of any one of source grating 4, diffraction grating 8, and shielding grating 12) can be made to be the same in the two directions. Accordingly, variation in relative position is easier to control as compared to a case where variation in relative position is different in the two directions.

The first and second embodiments have the pitch of the self-image in the third direction different from the pitch of the self-image in the fourth direction. However, by adjusting the pitch of the shielding grating 12 in the third direction and the pitch of the shielding grating 12 in the fourth direction so as to match the pitch of the self-image, this enables a moire pattern to be formed having the same pitch in the two intersecting directions. Thus, in the case of a parallel moire pattern, the pitch of the moire pattern in the third direction is decided by the difference between the pitch of the self-image in the third direction and the pitch of the shielding grating 12, and the pitch of the moire pattern in the fourth direction is decided by the difference between the pitch of the self-image in the fourth direction and the pitch of the shielding grating 12. Accordingly, the shielding grating 12 and diffraction grating 8 are designed and installed such that the difference between the shielding grating 12 and the self-image in the third direction is within a range of 1.05 times to 0.95 times the difference between the shielding grating 12 and the self-image in the fourth direction. Thus, a moire pattern can be formed where the pitches in the two intersecting directions are approximately the same.

The pitch of the first sub-source grating 104 is made to be smaller than the pitch of the second sub-source grating 204 in the same way as with the first embodiment, thereby diminishing offset between the positions of the first sub-source grating 104 and the second sub-source grating 204, and where the Lau conditions are satisfied. However, it should be noted that Expression (2) has been calculated in the first embodiment assuming that the pitch P1a of the diffraction grating 8 in the third direction and the pitch P1b of the diffraction grating 8 in the fourth direction are the same. While the arrangement in the present embodiment where the pitch of the first sub-source grating 104 is made to be smaller than the pitch of the second sub-source grating 204, this enables a reduction in the contrast of the interference pattern to be diminished, and the ideal pitches (P0a and P0b) are not the same as the pitches calculated by Expression (2).

The ideal pitches according to the present embodiment can be calculated by the following Expression (8), assuming that the pitch of the self-image in the third direction is the same as the pitch of the self-image in the fourth direction.

$$\mathtt{P0a = P0b \times L \; / \; (L + d) \quad Expression \; (8)}$$

Expression (8) will be described. Expression (1) yields

$$P0a = Psa \times L / z \qquad \text{Expression (1-a)}$$

and

$$P0b = Psb \times (L + d) / z \qquad \text{Expression (1-b).}$$

Accordingly, Expression (8) is derived when the pitch Psa of the self-image in the third direction and the pitch Psb of the self-image in the fourth direction are the same. In a case where Expression (7) and (8) hold, both the first sub-source grating 104 and the second sub-source grating 204 can be situated where the Lau conditions are satisfied. In a case where Expression (7) does not hold, Expressions (1-a) and (1-b) can be used to calculate ideal pitches P0a and P0b (where the Lau conditions are satisfied).

In the same way as with the first and second embodiments, even if the pitches of the first and second sub-source gratings 104 and 204 are not the ideal pitches of the first sub-source grating 104 and of the second sub-source grating 204, calculated from Expression (8) (or Expressions (1-a) and (1-b)), advantages of suppressed reduction in contrast can be obtained. In this case, the actual pitch of the first sub-source grating 104 is preferably closer to the ideal first sub-source grating 104 than the ideal pitch of the second sub-source grating 204. In the same way, the actual pitch of the second sub-source grating 204 is preferably closer to the ideal second sub-source grating 204 than the ideal pitch of the first sub-source grating 104.

Fourth Embodiment

An X-ray interferometer which differs from the first through third embodiments will be described in the fourth embodiment. The X-ray interferometer 1 according to the present embodiment differs from the first through third embodiments in that a diffraction grating 8 - as shown in Fig. 11 - having a first sub-diffraction grating 81 and a second sub-diffraction grating 82 is provided. The source grating 4 according to the present embodiment is the same as that in the second embodiment. Note that the pitches of the first sub-source grating 104 and the second sub-source grating 204 are the same. Other configurations are the same as with the first through third embodiments, so description thereof will be omitted here.

The diffraction grating 8 according to the present embodiment is illustrated in Fig. 11. The diffraction grating according to the present embodiment includes a first sub-diffraction grating 81 and a second sub-diffraction grating 82. The periodicity direction of the first sub-diffraction grating 81 is in the third direction, and the periodicity direction of the second sub-diffraction grating 82 is in the fourth direction. In a case where the diffraction grating is a phase diffraction grating, the phrase "periodicity direction" means the direction in which the first phase modulation region and the second phase modulation region are alternately arranged, and in a case where the diffraction grating is a amplitude diffraction grating, it means a direction in which the transmitting portions and shielding portions of the diffraction grating are alternately arranged. The pitch of the array does not have to be constant. The first sub-diffraction grating 81 and second sub-diffraction grating 82 are disposed so that the difference between a distance d2 between the first sub-diffraction grating 81 and second sub-diffraction grating 82 and the distance d of the first sub-source grating 104 and second sub-source grating 204 is 4 mm or smaller. The difference between the distance d2 between the first sub-diffraction grating 81 and second sub-diffraction grating 82 and the distance d of the first sub-source grating 104 and second sub-source grating 204 is preferably small, more preferably 2 mm or smaller, and even more preferably 0 mm (d2 = d). At this time, the pitch of the first sub-diffraction grating 81 and the pitch of the second sub-diffraction grating 82 are preferably the same. Accordingly, the first sub-source grating 104 and first sub-diffraction grating 81 are disposed at positions satisfying the Lau conditions, and the second sub-source grating 204 and second sub-diffraction grating 82 are disposed at positions satisfying the Lau conditions. In a case where the distance d2 between the first sub-diffraction grating 81 and the second sub-diffraction grating 82 and the distance d of the first sub-source grating 104 and second sub-source grating 204 are not the same, the pitch of the first sub-source grating 104 and second sub-source grating 204, or the first sub-diffraction grating 81 and second sub-diffraction grating 82 may be adjusted in accordance with the distance d2. The first and second embodiments may be referenced for the method of adjusting the pitch of the first sub-source grating 104 and second sub-source grating 204 and the pitch of the first sub-diffraction grating 81 and second sub-diffraction grating 82. That is to say, adjustment is preferably performed such that the first sub-source grating 104 and first sub-diffraction grating 81 satisfy the Lau conditions, and the second sub-source grating 204 and second sub-diffraction grating 82 satisfy the Lau conditions.

The first and second sub-diffraction gratings 81 and 82 may be curved as with the first and second sub-source gratings 104 and 204, or they may be planar in shape. In a case of curving the first and second sub-diffraction gratings 81 and 82, the curving is preferably performed in the periodicity direction as with the case of the first and second sub-source gratings 104 and 204. A curvature axis of the first sub-diffraction grating 81 and a curvature axis of the second sub-diffraction grating 82 are on the first sub-diffraction grating side, and the radius of curvature of the second sub-diffraction grating 82 is smaller than the radius of curvature of the first sub-diffraction grating 81. Further, the curvature axis of the first sub-diffraction grating 81 and the curvature axis of the second sub-diffraction grating 82 preferably intersect, and more preferably the intersection point of the curvature axis of the first sub-diffraction grating 81 and the curvature axis of the second sub-diffraction grating 82 match the center of the focal point of the X-ray source 2.

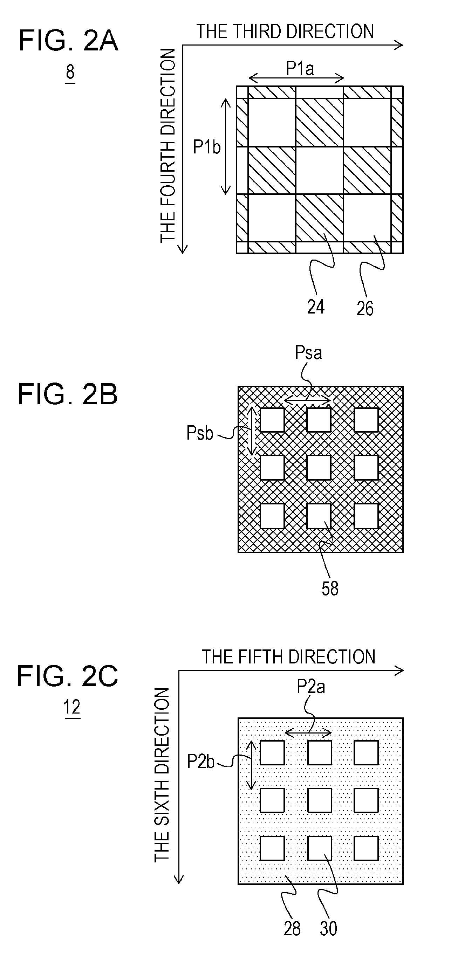

If the first sub-diffraction grating 81 and the second sub-diffraction grating 82 are disposed separated from each other, the position where a self-image is formed by the first sub-diffraction grating 81 and the position where a self-image is formed by the second sub-diffraction grating 82 are offset by a distance d2. Accordingly, the shielding grating 12 is preferably configured including a first sub-shielding grating having transmitting portions arranged in the fifth direction, and a second sub-shielding grating having transmitting portions arranged in the sixth direction. However, the effects of shift from the Talbot distance (positional shift of the shielding grating or detector) on the contrast of the self-image is small as compared to the Lau conditions not being satisfied. Accordingly, a single shielding grating such as illustrated in Fig. 2C may be used, having transmitting portions arranged in the fifth direction and the sixth direction. In a case of configuring the shielding grating using the first sub-shielding grating and the second sub-shielding grating, the first sub-shielding grating and second sub-shielding grating are preferably disposed so that the distance d3 therebetween is 1.05 times to 0.95 times the distance d between the first and second sub-source gratings 104 and 204.

The first through fourth embodiments have been described so far, in which the pitch of the first sub-source grating 104 and the pitch of the self-image in the third direction satisfy the Lau conditions, and the pitch of the second sub-source grating 204 and the pitch of the self-image in the fourth direction satisfy the Lau conditions. This can be realized by the following Expressions (1-a) and (1-b) both being satisfied at the same time.

$$P0a = Psa \times L\ /\ z \quad \text{Expression (1-a)}$$

$$P0b = Psb \times (L + d)\ /\ z \quad \text{Expression (1-b)}$$

where Psa represents the pitch of the self-image in the third direction, and Psb represents the pitch of the self-image in the fourth direction.

The first through fourth embodiments hold in common that at least one of the pitch of the source grating 4, the pitch of the diffraction grating 8, and the distance between the source grating 4 and diffraction grating 8 (modulation pattern) is made to be different in the third direction and fourth direction, so that the geometry of the source grating 4 and the diffraction grating 8 satisfies the Lau conditions in both the third direction and the fourth direction. These embodiments may be combined so that the geometry of the first and second sub-source gratings 104 and 204 and the diffraction grating 8 each satisfy the Lau conditions. For example, the pitch of the source grating 4 may be made to be different in the third direction and the fourth direction, and the pitch of the diffraction grating 8 also be made to be different in the third direction and the fourth direction, so that the geometry of the source grating 4 and diffraction grating 8 satisfies the Lau conditions in both the third direction and the fourth direction. Also, in an arrangement where the first sub-source grating 104 curves in the second direction and the second sub-source grating 204 curves in the first direction, the distance d between the first and second sub-source gratings 104 and 204 can be made smaller as compared to an arrangement where the first sub-source grating 104 curves in the first direction and the second sub-source grating 204 curves in the second direction. This may be utilized so that the geometry of the source grating 4 and diffraction grating 8 satisfy the Lau conditions in both the third direction and the fourth direction. While the interferometer 1 having the source grating 4 has been described in the first through fourth embodiments, an X-ray radiation unit may be configured including the source grating 4 and the X-ray source 2 which emits divergent X-rays to the source grating 4. The X-ray radiation unit may be combined with an interferometer to obtain an object information acquisition system to acquire object information.

More specific exemplary embodiments of the embodiments will now be described.

First Exemplary Embodiment

A first exemplary embodiment is a more specific exemplary embodiment of the third embodiment. The source grating 4 of an interferometer according to the present exemplary embodiment has the first sub-source grating 104 and second sub-source grating 204. The periodicity direction of the transmitting portions in the first sub-source grating 104 (first direction) and the periodicity direction of the transmitting portions in the second sub-source grating 204 (second direction) are orthogonal. The sub-source gratings are each curved in the direction of array thereof. The expression r1 = r2 + d holds where r1 represents the radius of curvature of the first sub-source grating 104 and r2 represents the radius of curvature of the second sub-source grating 204. The center of the focal point of the X-ray source 2 is situated at the intersection point of the curvature axis of the first sub-source grating 104 and the curvature axis of the second sub-source grating 204. Note that the curvature axis of the first sub-source grating 104 and the curvature axis of the second sub-source grating 204 intersect perpendicularly.

In the present exemplary embodiment, the pitch P0b of the second sub-source grating 204 is 22.55 $\mu$m, the pitch P0a of the first sub-source grating 104 is 22.07 $\mu$m, the thickness of the shielding portions of the sub-source gratings is 50 $\mu$m, and the distance d between the first sub-source grating 104 and the second sub-source grating 204 is 20 mm. The radius of curvature r1 of the first sub-source grating 104 is 150 mm, and the radius of curvature r2 of the second sub-source grating 204 is 130 mm.

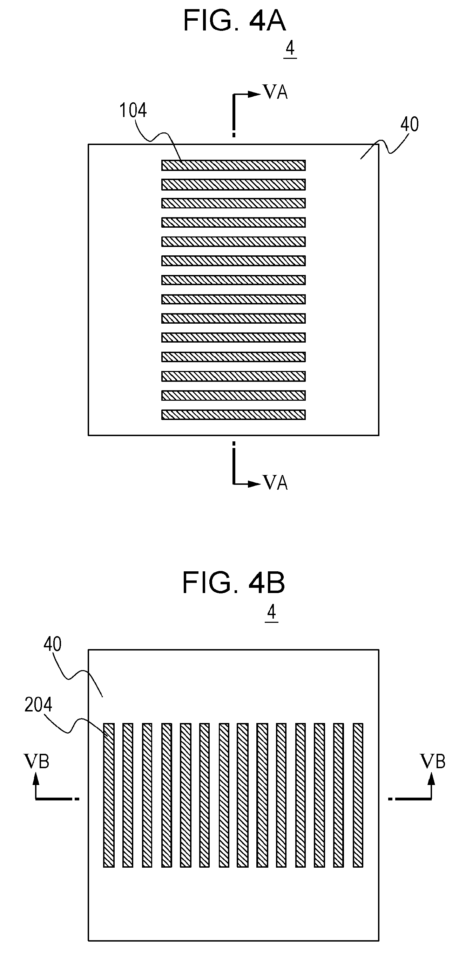

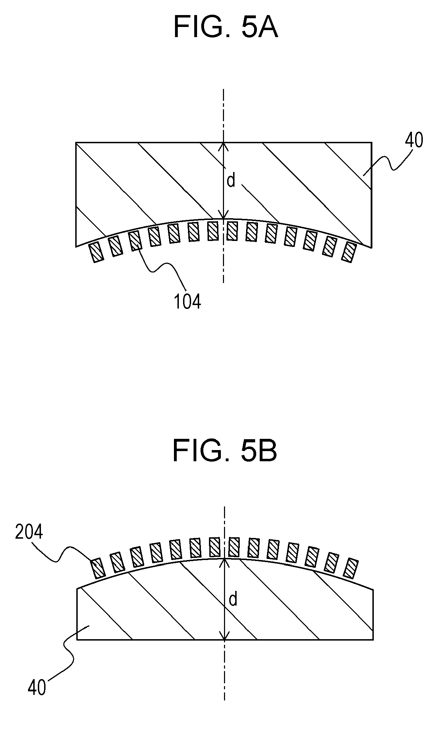

The source grating 4 according to the present exemplary embodiment includes a supporting portion 40 (shown in Figs. 4A, 4B, 5A and 5B) which supports the first and second sub-source gratings 104 and 204. The distance d between the first and second sub-source gratings 104 and 204 is maintained by the supporting portion 40. Using the supporting portion 40 is effective in reducing shift in the distance d between the first and second sub-source gratings 104 and 204, and in maintaining the curvature of the first and second sub-source gratings 104 and 204 constant. Figs. 4A and 4B illustrate the structure of the supporting portion 40 according to the present exemplary embodiment. Fig. 4A is a diagram viewing the source grating 4 from the shielding grating 12 side, and Fig. 4B is a diagram viewing the source grating 4 from the X-ray source 2 side. The first sub-source grating 104 is attached to one face of the supporting portion 40, and the second sub-source grating 204 is attached to the other face.

Fig. 5A is a cross-sectional view of the supporting portion 40 taken along line VA-VA in Fig. 4A. The thickness of the supporting portion 40 where the center line of the cross-section (the dotted line) passes is equivalent to the distance d. The radius of curvature of the face to which the first sub-source grating 104 is attached is the same as the radius of curvature r1 of the first sub-source grating 104. Fig. 5B is a cross-sectional view of the supporting portion 40 taken along line VB-VB in Fig. 4B. The radius of curvature of the face to which the second sub-source grating 204 is attached is the same as the radius of curvature r2 of the second sub-source grating 204. The supporting portion 40 according to the present exemplary embodiment may be formed of any material as long as the X-ray absorbance thereof is low. One example is polyethylene, other examples include resins of which the constituent atoms are carbon, hydrogen, nitrogen, and oxygen, which have low X-ray absorbance. Using materials with low X-ray absorbance such as resin materials enables decay of X-rays at the supporting portion 40 to be reduced. This means that the amount of time the object is irradiated by X-rays can be reduced using the same X-ray source 2.

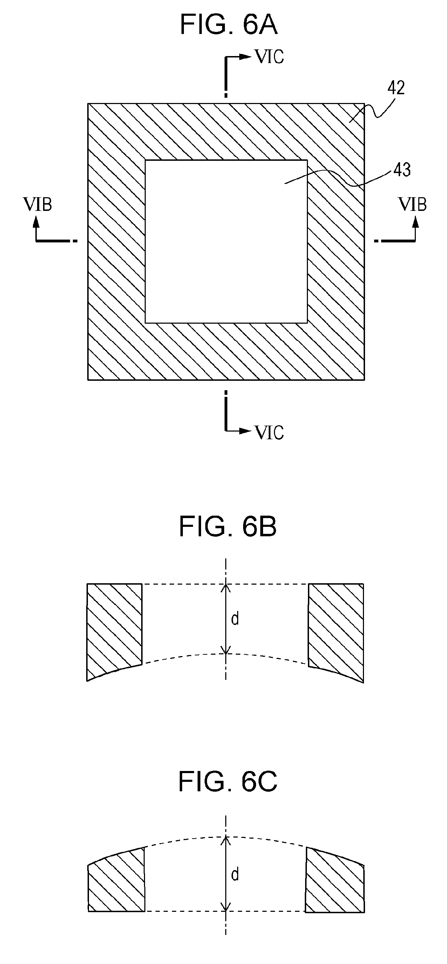

A metal such as stainless steel may be used as the material for the supporting portion. Using metal improves the accuracy of manufacturing, and deterioration caused by X-ray bombardment and deterioration over time can be suppressed. Many metal materials have high X-ray absorbance. In a case of using a metal with a high X-ray absorbance such as a supporting portion 42 illustrated in Figs. 6A through 6C, a hole 43 is preferably formed at the grating region. Fig. 6A is a top view of the supporting portion 42 formed of metal, Fig. 6B is a cross-sectional view of the supporting portion 42 taken along line VIB-VIB in Fig. 6A, and Fig. 6C is a cross-sectional view of the supporting portion 42 taken along line VIC-VIC in Fig. 6A. The supporting portion 42 may be made thinner instead of providing the hole 43. Alternatively, the hole may be provided or the thickness reduced at the portion of the supporting portion 42 around the optical path of the X-rays passing through the transmitting portions, instead of the entire grating region.

The diffraction grating 8 according to the present exemplary embodiment is illustrated in Fig. 2A. The diffraction grating according to the present exemplary embodiment is a phase grating where a first phase modulation region 24 and a second phase modulation region 26 are provided in checkerboard pattern, as illustrated in Fig. 2A. The pitch of the phase grating according to the present exemplary embodiment is P1a = 12.07 $\mu$m in the third direction and P1b = 12.00 $\mu$m in the fourth direction. The third direction and fourth direction orthogonally intersect. The phase difference of the X-rays passing through the first phase modulation region 24 and the X-rays passing through the second phase modulation region 26 is $\pi$ (a $\pi$ grating), and the height of the region imparting the phase modulation (the in thickness difference between the first phase modulation region 24 and the second phase modulation region 26) is 22.4 $\mu$m.

The self-image formed by the diffraction grating 8 in the present exemplary embodiment is a mesh-like pattern illustrated in Fig. 2B, where light portions 58 are discretely arranged. The pitch Psa in the third direction and pitch Psb in the fourth direction of the self-image formed in the present exemplary embodiment is such that Psa = Psb = 8.24 $\mu$m. The ratio of the width of light portions to the width of dark portions in the third direction is 1:1, and the ratio of the width of light portions to the width of dark portions in the fourth direction also is 1:1.

Fig. 2C illustrates the shielding grating 12 according to the present exemplary embodiment. As illustrated in Fig. 2C, the shielding grating 12 according to the present exemplary embodiment has a mesh-like pattern where the ratio of the width of transmitting portions 30 and shielding portions 28 is 1:1. The pitch P2a in the fifth direction and the pitch P2b in the sixth direction of the shielding grating according to the present exemplary embodiment is such that P2a

= P2b = 8.24 μm, and the thickness of the shielding portion is 50 μm. The fifth direction and the sixth direction orthogonally intersect.

The source grating 4 and the diffraction grating are positioned so that the first direction and the third direction are parallel, and so that the second direction and the fourth direction are parallel. The distance (L) between the first sub-source grating 104 and the diffraction grating is 934 mm, and the distance between the diffraction grating and the shielding grating 12 is 349 mm. This arrangement causes the light portions to overlay the light portions and dark portions to overlay the dark portions in the self-image formed by the X-rays from each transmitting portion of the source grating 4. The period of the self-image in the third direction and the period of the self-image in the fourth direction match. Overlaying the shielding grating 12 on the self-image and rotating the shielding grating 12 in the in-plane direction forms a moire pattern where light portions are arranged in a lattice form.

The detector 14 is situated downstream from the shielding grating 12, and detects X-rays from the shielding grating 12. The distance between the detector 14 and the shielding grating 12 is preferably minimal. The intensity of the self-image is the greatest at a position where the distance to the diffraction grating is the Talbot distance, so the distance between the diffraction grating and the shielding grating 12 is preferably as close as possible to the Talbot distance. The rotational angle of the shielding grating 12 is adjusted, and a moire pattern having a period of four pixels worth of pixels of the detector 14 is formed on the detecting face of the detector. This moire pattern is detected in a state where the object 6 is placed on the optical path between the source grating 4 and the shielding grating 12, and in a state with the object 6 removed therefrom, and the two detection results are transmitted to the calculation unit 16. The calculation unit 16 obtains a differential phase image, absorption image and scattering image from the two detection results. The calculation is performed by fringe analysis using Fourier transform, for example.

Fringe scanning may be performed instead of Fourier transform, but in this case, the shielding grating 12 needs to be scanned in two directions as to the self-image. Raster scanning is generally used for scanning in two directions. Description will be made here regarding a case of performing fringe scanning with the third direction parallel to the fifth direction, and the fourth direction parallel to the sixth direction. As described above, fringe scanning is described in International Publication No. WO 04/058070, and performing fringe scanning in two directions is described in Japanese Patent Laid-Open No. 2012-005820, so only an overview will be described here.

In order to perform raster scanning of the shielding grating 12 as to the self-image, the relative position of the self-image and shielding grating 12 is changed in each of the fifth direction and sixth direction. Change in the relative position can be realized by scanning one of the source grating 4, diffraction grating, and shielding grating 12. The shielding grating 12 is scanned in the present exemplary embodiment. The pitch P2a of the shielding grating 12 in the fifth direction is divided by ma, and the value obtained thereby (P2a/ma) is taken as the moving distance per step in the fifth direction. The pitch P2b of the shielding grating 12 in the sixth direction is divided by mb, and the value obtained thereby (P2b/mb) is taken as the moving distance per step in the sixth direction. Note that ma and mb are integers of 3 or greater. In the present exemplary embodiment, ma = mb = 3 is set. The raster scanning is performed for each of the fifth direction and sixth directions, and the intensity distribution of the moire pattern is detected at each step. This operation is performed in a state where the object 6 is situated on the optical path between the source grating 4 and the shielding grating 12, and in a state with the object 6 removed, and differential phase information, absorption information, and scattering information are obtained for each pixel from the total of 18 detections (3 x 3 times each with and without the object 6). Arraying this information two-dimensionally yields a differential phase image, absorption image, and scattering image. Second Exemplary Embodiment

A second exemplary embodiment is a more specific exemplary embodiment of the first embodiment. The pitch of the first sub-source grating 104, the pitch of the diffraction grating 8 in the third direction, and the pitch of the shielding grating 12 in the fifth direction differ from the first exemplary embodiment, but other arrangements are the same so description thereof will be omitted.

The source grating 4 according to the present embodiment has the first sub-source grating 104 and second sub-source grating 204, with the pitch P0a of the first sub-source grating 104 being 22.07 μm and the pitch P0b of the second sub-source grating 204 being 22.42 μm. The pitch P1a of the diffraction grating 8 in the third direction and the pitch P1b thereof in the fourth direction are both 12.00 μm. Furthermore, the pitch P2a of the shielding grating 12 in the fifth direction is 8.19 μm, and the pitch P2b in the sixth direction is 8.24 μm. The transmitting portions 30 (within the shielding portions 28) of the shielding grating 12 are rectangular, as illustrated in Fig. 10 for example. The distance (L) between the first sub-source grating 104 and the diffraction grating 8 is 934 mm, and the distance (z) between the diffraction grating 8 and the shielding grating 12 is 349 mm. This arrangement causes the light portions to overlay the light portions and dark portions to overlay the dark portions in the interference pattern formed by the X-rays from each transmitting portion of the source grating 4. The pitch Psa of the self-image in the third direction and the pitch P2a of the shielding grating 12 in the fifth direction agree, and the pitch Psb of the self-image in the fourth direction and the pitch P2b of the shielding grating 12 in the sixth direction match.

The in-plane angle of the shielding grating 12 is adjusted, and a moire pattern having a period of four pixels worth of pixels of the detector 14 is formed on the detecting face of the detector 14. This moire pattern is detected in a state where the object 6 is placed on the optical path between the source grating 4 and the shielding grating 12, and in a state with the object 6 removed therefrom, and object information is obtained by Fourier transform or fringe scanning.

Third Exemplary Embodiment

A third exemplary embodiment is a more specific exemplary embodiment of the first embodiment. The present exemplary embodiment differs from the second exemplary embodiment in that the pitch P2a of the shielding grating 12 in the fifth direction and the pitch P2b of the shielding grating 12 in the sixth direction are the same, but other arrangements are the same so description thereof will be omitted.

In the present embodiment, P2a = P2b = 8.24 $\mu$m. Accordingly, the pitch of the self-image in the third direction and the pitch of the shielding grating 12 in the fifth direction are the same, but the pitch of the self-image in the fourth direction and the pitch of the shielding grating 12 in the sixth direction are different. Accordingly, the in-plane angle of the shielding grating 12 is adjusted, and in the moire pattern that is formed on the detecting face of the detector 14, the pitch in one periodicity direction of the moire pattern and the pitch in the other periodicity direction are different, and also the one periodicity direction and the other periodicity direction do not intersect orthogonally.

This moire pattern is detected in a state where the object 6 is placed on the optical path between the source grating 4 and the shielding grating 12, and in a state with the object 6 removed therefrom, and object information is obtained.

In a case where the pitch in one periodicity direction of the moire pattern and the pitch in the other periodicity direction differ as with the present exemplary embodiment, the distance from the origin with respect to the X axis in the first-order spectrum obtained by performing Fourier transform on the detection results differs from the distance from the origin with respect to the Y axis. That is to say, if the peak position of the first-order spectrum is (x, y), x # y. Accordingly, there is the need to perform phase retrieval, taking into account the peak position of the first-order spectrum, but in a case of using the Fourier transform method described in International Publication No. WO 2010/050483 for example, the segmentation position of the peak can be set to match the peak position of the first-order spectrum. Also, in a case of performing fringe scanning, the moving distance of the self-image or shielding grating 12 per step can be changed in accordance with the pitch of the self-image or shielding grating 12 in the two directions.

If the one periodicity direction and the other periodicity direction do not intersect orthogonally, the line segments obtained by connecting the two sets of first-order spectrums in a mirror relationship with respect to the origin do not intersect orthogonally either. However, the differential direction of the obtained differential phase information is set by the periodicity direction of the diffraction grating 8. Accordingly, if the periodicity directions of the modulation pattern which the diffraction grating 8 has (third direction and fourth direction) intersect orthogonally, the two differential directions of the differential phase image also intersect orthogonally. Thus, the orthogonality of the periodicity direction of the moire pattern is not problematic even if the differential phase information is integrated to obtain phase information. Fourth Exemplary Embodiment

A fourth exemplary embodiment is a more specific exemplary embodiment of the second embodiment. The present exemplary embodiment differs from the second exemplary embodiment in that the pitch P0a of the first sub-source grating 104 of the source grating 4 and the pitch P0b of the second sub-source grating 204 are the same, and that the pitch of the modulation pattern in the third direction and the pitch of the modulation pattern in the fourth direction are different, but other arrangements are the same so description thereof will be omitted.

In the present exemplary embodiment, both the pitch P0a of the first sub-source grating 104 and the pitch P0b of the second sub-source grating 204 of the source grating 4 are 22.07 $\mu$m. The pitch P1a of the modulation pattern in the third direction is 12.00 $\mu$m, and the pitch P1b of the modulation pattern in the fourth direction is 11.82 $\mu$m. Further, the pitch P2a of the shielding grating 12 in the fifth direction is 8.24 $\mu$m, and the pitch P2b of the shielding grating 12 in the sixth direction is 8.07 $\mu$m. The position of the gratings is the same as in the second exemplary embodiment. This arrangement causes the light portions to overlay the light portions and dark portions to overlay the dark portions in the interference pattern formed by the X-rays from each transmitting portion of the source grating 4. The pitch of the self-image in the third direction and the pitch of the shielding grating 12 in the fifth direction match, and the pitch of the self-image in the fourth direction and the pitch of the shielding grating 12 in the sixth direction match.

The in-plane angle of the shielding grating 12 is adjusted, and a moire pattern having a period of four pixels worth of pixels of the detector 14 is formed on the detecting face of the detector 14. This moire pattern is detected in a state where the object 6 is placed on the optical path between the source grating 4 and the shielding grating 12, and in a state with the object 6 removed therefrom, and object information is obtained.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

**Claims**

1. A source grating (4), comprising:

   a first sub-source grating (104), where first transmitting portions (124) which transmit X-rays and first shielding portions (114) which shield X-rays are alternately arranged in a first direction; and
   a second sub-source grating (204), where second transmitting portions (224) which transmit X-rays and second shielding portions (214) which shield X-rays are alternately arranged in a second direction substantially orthogonal to the first direction;
   wherein the first sub-source grating (104) is formed as a curve with two positions along the curve aligned in the first direction;
   and wherein the second sub-source grating (204) is formed as a curve with two positions along the curve aligned in the second direction.

2. The source grating (4) according to Claim 1, wherein the pitch of the first transmitting portions (124) of the first sub-source grating (104) is smaller than the pitch of the second transmitting portions (224) of the second sub-source grating (204).

3. The source grating (4) according to either Claim 1 or 2,
   wherein the second sub-source grating (204) is upstream from the first sub-source grating (104); and
   a radius of curvature of the second sub-source grating (204) is smaller than a radius of curvature of the first sub-source grating (104).

4. The source grating (4) according to Claim 3, wherein

$$r1 = r2 + d$$

   where r1 represents the radius of curvature of the first sub-source grating (104), r2 represents the radius of curvature of the second sub-source grating (204), and d represents a distance between the first sub-source grating (104) and the second sub-source grating (204) and wherein d is greater than 4 mm.

5. An interferometer (1), comprising:

   the source grating (4) according to any one of Claims 1 to 4;
   a diffraction grating (8) configured to perform diffraction of X-rays from the source grating (4) and to form an interference pattern; and
   a detector (14) configured to detect intensity of the X-rays from the diffraction grating (8) and to obtain information of intensity distribution of the X-rays;
   wherein the source grating (4) is configured spatially to split divergent X-rays from an X-ray source (2);
   and wherein the diffraction grating (8) has modulation directions in a third direction and in a fourth direction substantially orthogonal to the third direction.

6. The interferometer (1) according to Claim 5, wherein

$$P0a = P0b \times (L + z) / (L + d + z)$$

   where P0a represents a pitch of the first sub-source grating (104) in the third direction, P0b represents the pitch of the second sub-source grating (204) in the fourth direction, L represents the distance between the first sub-source grating (104) and the diffraction grating (8), z represents the distance between the diffraction grating (8) and the interference pattern, and d represents the distance between the first sub-source grating (104) and the second sub-source grating (204).

7. The interferometer (1) according to Claim 5, wherein the pitch of the modulation pattern of the diffraction grating (8) in the third direction and the pitch of the modulation pattern thereof in the fourth direction are different from each other.

**8.** The interferometer (1) according to Claim 7, wherein the following expression holds

$$P1a = P1b \times (L + d + z) / (L + z)$$

where P1a represents the pitch of the modulation pattern of the diffraction grating (8) in the third direction, P1b represents the pitch of the modulation pattern of the diffraction grating (8) in the fourth direction, L represents the distance between the first sub-source grating (104) and the diffraction grating (8), z represents the distance between the diffraction grating (8) and the interference pattern, and d represents the distance between the first sub-source grating (104) and the second sub-source grating (204).

**9.** The interferometer (1) according to Claim 5,
wherein the diffraction grating (8) includes a first sub-diffraction grating (81) and a second sub-diffraction grating (82);
wherein the second sub-diffraction grating (82) is disposed between the first sub-diffraction grating (81) and the first sub-source grating (104);
wherein the first sub-diffraction grating is disposed between the second sub-diffraction grating and the detector (14);
and wherein the difference between
the distance (d) between the first sub-source grating (104) and the second sub-source grating (204), and
the distance (d2) between the first sub-diffraction grating and the second sub-diffraction grating
is 4 mm or less.

**10.** The interferometer (1) according to Claim 9, further comprising:

a shielding grating (12) configured to shield a part of the interference pattern;
wherein the detector (14) is configured to detect X-rays from the shielding grating (12);
wherein the shielding grating (12) includes a first sub-shielding grating and a second sub-shielding grating;
wherein the first sub-shielding grating is disposed between the second sub-shielding grating and the detector (14);
and wherein the distance between the first sub-shielding grating and the second sub-shielding grating is within a range of 1.05 times to 0.95 times the distance (d) between the first sub-source grating (104) and the second sub-source grating (204).

**11.** The interferometer (1) according to Claim 5, wherein

$$P0a = P0b \times L / (L + d)$$

where P0a represents the pitch of the first sub-source grating (104) in the third direction, P0b represents the pitch of the second sub-source grating (204) in the fourth direction, L represents the distance between the first sub-source grating (104) and the diffraction grating (8), z represents the distance between the diffraction grating (8) and the interference pattern, and d represents the distance between the first sub-source grating (104) and the second sub-source grating (204).

**12.** The interferometer (1) according to Claim 7, wherein

$$P1a = P1b \times L(L + d + z) / (L + z)(L + d)$$

where P1a represents the pitch of the modulation pattern in the third direction, P1b represents the pitch of the modulation pattern in the fourth direction, L represents the distance between the first sub-source grating (104) and the diffraction grating (8), z represents the distance between the diffraction grating (8) and the interference pattern, and d represents the distance between the first sub-source grating (104) and the second sub-source grating (204).

**13.** The interferometer (1) according to any one of Claims 5 to 8, 11 and 12, further comprising:

a shielding grating (12) configured to shield a part of the interference pattern;
wherein the shielding grating (12) includes third transmitting portions which transmit X-rays, and third shielding portions which shield X-rays, arranged in a fifth direction and a sixth direction different from the fifth direction; and wherein the detector (14) is configured to detect X-rays from the shielding grating (12).

14. An object information acquisition system, comprising:

the interferometer (1) according to any one of Claims 5 to 13; and
calculation means configured to obtain information of an object (6) disposed between the source grating (4) and the diffraction grating (8) or between the diffraction grating (8) and the detector (14), using information of detection results obtained by the detector (14).

15. The object information acquisition system according to Claim 14, using an interferometer (1) including
a source grating (4) configured to spatially split divergent X-rays from an X-ray source (2),
a diffraction grating (8) configured to perform diffraction of X-rays from the source grating (4) and to form an interference pattern, and
a detector (14) configured to detect intensity of the X-rays from the diffraction grating (8) and to obtain information of intensity distribution of the X-rays.

16. Radiation means, comprising:

an X-ray source (2) configured to emit divergent X-rays; and
the source grating (4) according to any one of Claims 1 to 4;
wherein the source grating (4) is configured to split X-rays emitted from the X-ray source (2).

# FIG. 1

# FIG. 2A
### 8

THE THIRD DIRECTION

THE FOURTH DIRECTION

P1a

P1b

24    26

# FIG. 2B

Psa

Psb

58

# FIG. 2C
### 12

THE FIFTH DIRECTION

THE SIXTH DIRECTION

P2a

P2b

28    30

# FIG. 3

## FIG. 4A

4

## FIG. 4B

4

## FIG. 5A

## FIG. 5B

FIG. 6A

VIC

42

43

VIB VIB

VIC

FIG. 6B

d

FIG. 6C

d

EP 2 827 339 A1

FIG. 7A

44

FIG. 7B

46

26

# FIG. 8A

48

52

# FIG. 8B

50

48

# FIG. 8C

50

48

52

# FIG. 8D

48

54

FIG. 9

THE FOURTH DIRECTION

THE THIRD DIRECTION

P1b

P1a

24    26

FIG. 10

THE FIFTH DIRECTION

THE SIXTH DIRECTION

P2a

P2b

28    30

FIG. 11

8

81

d2

82

**EUROPEAN SEARCH REPORT**

Application Number

EP 14 17 6029

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2012/052900 A1 (KONINKL PHILIPS ELECTRONICS NV [NL]; PHILIPS INTELLECTUAL PROPERTY [DE] 26 April 2012 (2012-04-26) * page 7, lines 14-15; figure 2 * | 1,5,16 | INV. G21K1/02 |
| Y | US 2012/002785 A1 (KANEKO YASUHISA [JP]) 5 January 2012 (2012-01-05) * figure 1 * | 1,5,16 | |
| A | US 5 812 629 A (CLAUSER JOHN F [US]) 22 September 1998 (1998-09-22) | 1 | |
| A | WO 2009/128550 A1 (CANON KK [JP]; ITOH HIDENOSUKE [JP]; ICHIMURA YOSHIKATSU [JP]; NAKAMUR) 22 October 2009 (2009-10-22) * figure 1a * | 1 | |

**TECHNICAL FIELDS SEARCHED (IPC)**

G21K

The present search report has been drawn up for all claims

| Place of search | Date of completion of the search | Examiner |
|---|---|---|
| Munich | 8 December 2014 | Oestreich, Sebastian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**ANNEX TO THE EUROPEAN SEARCH REPORT
ON EUROPEAN PATENT APPLICATION NO.** EP 14 17 6029

This annex lists the patent family members relating to the patent documents cited in the above-mentioned European search report.
The members are as contained in the European Patent Office EDP file on
The European Patent Office is in no way liable for these particulars which are merely given for the purpose of information.

08-12-2014

| Patent document cited in search report | | Publication date | Patent family member(s) | | Publication date |
|---|---|---|---|---|---|
| WO 2012052900 | A1 | 26-04-2012 | CN | 103168228 A | 19-06-2013 |
| | | | EP | 2630476 A1 | 28-08-2013 |
| | | | JP | 2013540031 A | 31-10-2013 |
| | | | US | 2013202081 A1 | 08-08-2013 |
| | | | WO | 2012052900 A1 | 26-04-2012 |
| US 2012002785 | A1 | 05-01-2012 | JP | 2012013530 A | 19-01-2012 |
| | | | US | 2012002785 A1 | 05-01-2012 |
| US 5812629 | A | 22-09-1998 | AU | 6463298 A | 24-11-1998 |
| | | | US | 5812629 A | 22-09-1998 |
| | | | WO | 9849546 A1 | 05-11-1998 |
| WO 2009128550 | A1 | 22-10-2009 | CN | 102047344 A | 04-05-2011 |
| | | | EP | 2248135 A1 | 10-11-2010 |
| | | | JP | 5451150 B2 | 26-03-2014 |
| | | | JP | 2009276342 A | 26-11-2009 |
| | | | US | 2010246764 A1 | 30-09-2010 |
| | | | WO | 2009128550 A1 | 22-10-2009 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010050483 A
- WO 04058070 A

- JP 2012005820 A

**Non-patent literature cited in the description**

- *Physical Review Letters,* 2010, vol. 105, 248102